# DEMANDE DE BREVET EUROPEEN

(11) **EP 4 835 758 A1**
(43) Date de publication de la demande: **04.11.2026**
(21) Numéro de dépôt: 26175523.5
(22) Date de dépôt: 29.04.2026
(51) Int. Cl.: G06Q 10/04

(54) **MÉTHODE MISE EN OEUVRE PAR ORDINATEUR POUR GÉRER LE PARTAGE D'ÉNERGIE DANS UN RÉSEAU**

(30) Priorité: 29.04.2025 BE 202505281
(71) Demandeur: Lucun, 1000 Bruxelles (BE)
(72) Inventeur: DESAGER, Jean-Philippe, 1785 Merchtem (BE); SIAENS, Tim, 1000 Bruxelles (BE); HACHEM SAMII, Omid, 1450 Chastre (BE); RAMAN, Jean-François, 1180 Bruxelles (BE)
(74) Mandataire: Gevers Patents

(57) **Abrégé**

La présente invention concerne une méthode (100) informatique pour gérer de manière optimisée le partage d'énergie dans un réseau (200) comprenant des nœuds producteurs (P1, P2, P3, P4, P5, P6) et des nœuds consommateurs (C1, C2, C3, C4). La méthode repose sur une approche décentralisée assurant une répartition proactive et équilibrée des ressources tout en minimisant les pertes et les coûts. Les transferts d'énergie sont réalisés de manière sécurisée et transparente grâce à un registre distribué basé sur la technologie de chaine de blocs. Cette méthode (100) garantit une gestion efficace de l'énergie dans un réseau virtuel, favorisant l'intégration des énergies renouvelables et la conformité avec les exigences réglementaires.

## Description

### Domaine technique

La présente invention concerne une méthode mise en œuvre par ordinateur pour gérer le partage d'énergie dans un réseau comprenant une pluralité de nœuds producteurs et de nœuds consommateurs.

### Art antérieur

Dans le contexte actuel de transition énergétique mondiale, la gestion d'énergie dans les réseaux électriques est confrontée à de nouveaux défis. L'intégration croissante de sources d'énergie renouvelables, telles que le solaire et l'éolien, souvent décentralisées et intermittentes, nécessite une approche plus flexible et dynamique. Traditionnellement, les réseaux électriques sont gérés de manière centralisée, avec une production d'énergie concentrée et un flux unidirectionnel vers les consommateurs. Ces systèmes centralisés présentent plusieurs inconvénients : manque de réactivité face aux fluctuations de la demande et de l'offre, faible intégration des sources décentralisées, et une transparence limitée dans la gestion d'énergie.

### Exposé de l'invention

Un objet de l'invention est de fournir une méthode mise en œuvre par ordinateur pour gérer le partage d'énergie dans un réseau, de manière décentralisée, automatisée et plus transparente.

A cet effet, il est proposé une méthode mise en œuvre par ordinateur pour gérer le partage d'énergie dans un réseau comprenant une pluralité de nœuds producteurs et de nœuds consommateurs, la méthode comprenant les étapes suivantes :
a. recevoir d'un nœud consommateur, une demande de quantité d'énergie,
b. sélectionner au moins un nœud producteur sur la base de la quantité d'énergie demandée, d'une quantité d'énergie produite par chacun de l'au moins un nœud producteur et de métadonnées caractéristiques de chacun des nœuds consommateur et producteur,
c. réaliser un transfert d'énergie entre l'au moins un nœud producteur sélectionné à l'étape précédente et le nœud consommateur de l'étape a.,
d. enregistrer dans un registre distribué de chaines de blocs, une information représentative du transfert d'énergie réalisé à l'étape précédente.

La méthode selon l'invention présente plusieurs avantages. Premièrement, elle permet une allocation dynamique et optimisée de l'énergie, en tenant compte des métadonnées caractéristiques des nœuds producteurs et consommateurs, telles que la capacité de production, la consommation historique ou les priorités énergétiques. Deuxièmement, l'utilisation d'un registre distribué de chaînes de blocs assure la transparence et la traçabilité des transfert énergétiques, tout en réduisant les risques d'erreurs ou de falsification des données. Enfin, la méthode propose une approche automatisée et décentralisée, réduisant ainsi la dépendance aux systèmes centralisés et permettant une plus grande résilience du réseau face aux défaillances.

Dans le contexte de cette invention, le réseau énergétique est virtuel, ce qui signifie qu'il ne représente pas un réseau physique unique ou fixe de câbles et de transformateurs, mais plutôt une infrastructure logicielle et numérique qui permet de gérer et coordonner les échanges d'énergie. Ce réseau virtuel est basé sur des algorithmes informatiques qui supervisent les demandes et les offres d'énergie entre les nœuds producteurs et consommateurs. Les données relatives à chaque nœud, telles que leur capacité, leur localisation ou leur état actuel (production ou consommation), sont analysées et traitées par ce système virtuel pour orchestrer les transferts d'énergie. Ces échanges ne nécessitent pas forcément une modification ou une réorganisation du réseau physique sous-jacent, car ils reposent sur une abstraction numérique qui identifie les meilleures routes énergétiques et les priorités d'allocation. L'étape de réaliser un transfert d'énergie entre l'au moins un nœud producteur sélectionné et le nœud consommateur consiste, selon l'invention, à affecter, par voie logicielle au sein du réseau virtuel, une quantité d'énergie correspondant à la demande reçue du nœud consommateur, ladite quantité d'énergie étant allouée à partir de l'énergie disponible au niveau du ou des nœuds producteurs sélectionnés, sur la base des métadonnées caractéristiques associées. Le transfert peut être mis en œuvre sous la forme d'une affectation virtuelle, ou comptable, sans nécessité d'un acheminement physique dédié, et il est supervisé par un module de contrôle garantissant la cohérence, la traçabilité et l'optimisation des flux énergétiques dans le réseau.

Dans le contexte de l'invention, l'enregistrement dans un registre distribué repose sur la technologie des chaînes de blocs pour consigner chaque transfert d'énergie de manière transparente, sécurisée et immuable. Lorsqu'un transfert est effectué entre un nœud producteur et un nœud consommateur, les informations clés (quantité d'énergie, identifiants des nœuds, date et heure, et métadonnées associées) sont collectées et validées par les participants du réseau via un mécanisme de consensus. Une fois validée, la transaction est encapsulée dans un bloc cryptographiquement lié aux blocs précédents, formant une chaîne chronologique irréversible. Ce registre est ensuite distribué et synchronisé entre tous les nœuds participants, garantissant disponibilité et résilience même en cas de défaillance de certains nœuds. Les données ainsi enregistrées sont accessibles pour vérification, offrant une traçabilité totale et renforçant la confiance entre les nœuds participants. Ce processus assure une gestion décentralisée efficace et une sécurité optimale des transferts d'énergie dans le réseau virtuel.

Comme le comprendra l'homme de métier, le terme « nœud consommateur » désigne une entité au sein du réseau qui demande et consomme de l'énergie. Cela peut être une maison, un bâtiment, ou tout dispositif nécessitant de l'énergie pour fonctionner. Le terme « nœud producteur », quant à lui, désigne une entité capable de produire de l'énergie. Cela peut inclure un bâtiment équipé des panneaux solaires, des éoliennes, des centrales électriques ou même des batteries capables de stocker et redistribuer de l'énergie. Le réseau peut également comprendre des nœuds représentatifs des éléments d'infrastructure, tels que les cabines de distribution basse et haute tension et les compteurs EAN (European Article Number) Master et Slave. Les cabines basse et haute tension assurent la transformation et la régulation des niveaux de tension, permettant une transmission efficace de l'énergie entre les producteurs et les consommateurs. Les compteurs EAN Master et Slave, quant à eux, sont des dispositifs de mesure et de suivi qui garantissent une traçabilité précise des transferts énergétiques. Les compteurs Master supervisent les flux énergétiques à un niveau global, comme pour une zone géographique ou un groupe de consommateurs, tandis que les compteurs Slave permettent un suivi granulaire des transactions à un niveau individuel. Ces infrastructures, bien qu'indirectes, sont essentielles pour assurer l'efficacité, la transparence et la résilience du réseau énergétique.

Comme le comprendra l'homme de métier, les métadonnées sont des données qui décrivent ou caractérisent d'autres données ou objets. Dans le contexte d'un réseau énergétique, les métadonnées fournissent des informations supplémentaires sur les nœuds (consommateurs et producteurs), leur fonctionnement, leurs capacités et leurs contraintes. Elles peuvent inclure des données techniques (capacité de production ou de consommation, type de technologie utilisée), géographiques (localisation, proximité avec d'autres nœuds), historiques (comportements passés de consommation et de production), économiques (coût de production, tarifs appliqués, rentabilité des transferts). Elles peuvent inclure également des données temporelles (heures de pointe, disponibilité) ou environnementales (impact carbone, part d'énergie renouvelable). Les métadonnées sont essentielles pour analyser les demandes des nœuds consommateurs, sélectionner les nœuds producteurs les plus adaptés, exécuter les transferts d'énergie de manière efficace et enregistrer les transferts dans un registre distribué.

Dans un mode de réalisation, les étapes a., b., c. et d. sont exécutées de manière itérative de sorte à couvrir au moins 50% du total des quantités d'énergie demandées par les nœuds consommateurs. À chaque itération, une demande d'énergie émise par un nœud consommateur est traitée (étape a.), un ou plusieurs nœuds producteurs sont sélectionnés en fonction de leurs capacités et des métadonnées disponibles (étape b.), un transfert d'énergie est effectué (étape c.), et les détails de ce transfert sont enregistrés dans un registre distribué (étape d.). Ce processus se répète jusqu'à ce qu'au moins 50 % du total des quantités d'énergie demandées par les nœuds consommateurs du réseau soient satisfaites. Cette approche itérative permet d'optimiser la gestion des transferts, en adaptant les sélections des producteurs à la disponibilité des ressources et aux priorités définies, tout en assurant une traçabilité et une sécurité constantes via l'enregistrement systématique des transferts.

De préférence, les itérations visent à minimiser un écart-type de ratios de satisfaction, chaque ratio étant calculé pour un nœud consommateur comme un rapport entre une quantité d'énergie reçue et la quantité d'énergie demandée par ce nœud. Avantageusement, cette configuration repose sur un critère d'équité et d'optimisation, visant à distribuer l'énergie de manière aussi homogène que possible entre les nœuds consommateurs, tout en réduisant les disparités dans la satisfaction des demandes d'énergie. En minimisant l'écart-type des ratios de consommation, la méthode garantit que tous les nœuds consommateurs reçoivent une proportion comparable de l'énergie qu'ils demandent. Cela prévient les situations où certains nœuds seraient suralimentés tandis que d'autres resteraient sous-alimentés.

Dans un mode de réalisation, les étapes a., b., c. et d. de la méthode sont exécutées de manière itérative de sorte à transférer entre 90 % et 100 % des quantités d'énergie produites par les nœuds producteurs. Concrètement, le processus parcourt successivement les nœuds consommateurs du réseau pour traiter leurs demandes d'énergie, sélectionner pour chaque nœud consommateur, un ou plusieurs nœuds producteurs appropriés en fonction de leurs capacités et métadonnées, réaliser les transferts d'énergie correspondants, et enregistrer chaque transfert dans le registre distribué. À chaque itération, la méthode ajuste dynamiquement les sélections de producteurs pour maximiser l'efficacité du transfert tout en tenant compte des contraintes du réseau. Ce processus itératif se poursuit jusqu'à ce que la quasi-totalité des quantités produites soit transférée, garantissant une allocation optimale des ressources énergétiques.

Dans un mode de réalisation, les métadonnées comprennent une information sur un historique de consommation et/ou de production d'énergie. Cet historique couvre, de préférence, une période de 3 ans. Il peut inclure des données telles que les quantités consommées ou produites à différentes périodes (journées, semaines, mois), les fluctuations saisonnières, ou les modèles de comportement énergétique spécifiques de chaque nœud. Ainsi, l'historique offre une vue complète et fiable des performances passées des nœuds, permettant au système, par exemple, d'évaluer les capacités des producteurs. Par exemple, un producteur solaire avec un historique montrant une production stable sur trois ans sera préféré pour des transferts critiques par rapport à un producteur intermittent.

Dans un mode de réalisation, la méthode comprend en outre l'étape suivante :
e. estimer la quantité d'énergie demandée et respectivement produite sur la base de l'information sur l'historique de consommation et respectivement de production d'énergie, la méthode étant caractérisée en ce que l'au moins un nœud producteur est sélectionné sur la base des quantités d'énergie demandée et produite estimées.

Ainsi, la méthode intègre une étape supplémentaire visant à estimer la quantité d'énergie qui sera demandée par les nœuds consommateurs et celle qui sera produite par les nœuds producteurs. Cette estimation est réalisée en analysant les tendances et les schémas issus des données historiques, à l'aide de modèles statistiques ou d'algorithmes d'apprentissage automatique. Cette étape permet d'anticiper les besoins et les disponibilités énergétiques dans le réseau, améliorant ainsi la planification automatique des transferts, la répartition des ressources, et la réactivité globale du système. L'estimation est, de préférence, effectuée pour des périodes de temps correspondant à des mois. Autrement dit, le système analyse les données historiques pour estimer les besoins en énergie (consommation) et les capacités de production pour chaque mois, en tenant compte des tendances saisonnières et des fluctuations spécifiques à cette échelle de temps. L'estimation des quantités d'énergie demandées et produites peut être réalisé au moyen d'un apprentissage fédéré, dans lequel un modèle d'apprentissage est entraîné localement au niveau d'un nœud consommateur/producteur, par exemple au niveau d'un compteur intelligent, sans transmission des données brutes vers une plateforme centrale. Les données privées de consommation/production restent alors stockées localement, améliorant ainsi la protection des données personnelles et la conformité aux exigences applicables en matière de confidentialité.

De plus, la méthode selon l'invention peut aborder l'équilibrage de la distribution d'énergie à travers une approche de répartition dynamique, basée sur un ensemble d'algorithmes d'optimisation avancés. Ces algorithmes interviennent dans les étapes critiques du processus (notamment les étapes b. et c.), afin d'anticiper et de prévenir le décrochage potentiel des installations de production ou de consommation. Plus précisément, l'algorithme exploite les données historiques et les estimations de consommation et de production pour identifier les périodes critiques où des déséquilibres énergétiques pourraient survenir. Ces déséquilibres sont corrigés en ajustant dynamiquement les sélections des nœuds producteurs. En aval du processus, ce mécanisme garantit une stabilité accrue du réseau, en réduisant les risques de surcharge ou de sous-alimentation des installations. Cette fonctionnalité s'avère particulièrement utile dans les réseaux à forte intégration de sources renouvelables, où la variabilité de la production peut entraîner des fluctuations imprévues. Par ailleurs, la méthode peut s'appuyer sur une combinaison d'algorithmes avancés pour garantir une gestion optimale des transferts d'énergie. Ces algorithmes incluent notamment des modèles d'apprentissage automatique supervisés et non supervisés pour l'analyse prédictive des demandes et productions d'énergie, des algorithmes d'optimisation mathématique (tels que les algorithmes linéaires et non linéaires) pour résoudre les problèmes de répartition dynamique, ainsi que des heuristiques basées, par exemple, sur les algorithmes génétiques pour améliorer l'efficacité des sélections des nœuds producteurs.

Dans une réalisation alternative, la méthode comprend en outre une étape d'incitation au déplacement de charge, dans laquelle le système détermine, sur la base des quantités d'énergie estimées, des disponibilités locales des nœuds producteurs et des métadonnées temporelles, au moins une période alternative de consommation pour un nœud consommateur. Le système peut alors transmettre audit nœud consommateur une recommandation visant à décaler tout ou partie de sa demande d'énergie vers ladite période alternative, par exemple afin de privilégier l'utilisation d'une énergie produite localement par un nœud producteur disponible. À titre d'exemple, le système peut recommander le lancement d'un équipement électrique à 14h00 plutôt qu'à 18h00 lorsque la production solaire locale est supérieure pendant cette période.

Dans un mode de réalisation, les métadonnées comprennent une information sur un emplacement géographique de chacun des nœuds consommateurs et producteurs. Ces données géographiques permettent de localiser précisément les nœuds au sein du réseau, généralement sous la forme de coordonnées GPS ou d'adresses spécifiques. Cette information est essentielle pour optimiser la gestion des transferts d'énergie, en tenant compte des distances entre les nœuds.

Dans un mode de réalisation, l'étape b. est exécutée de sorte qu'un coût de transfert d'énergie entre le nœud consommateur et l'au moins un nœud producteur sélectionné soit inférieur à un seuil prédéfini, le coût de transfert d'énergie étant une fonction croissante d'une distance entre l'emplacement géographique du nœud consommateur et celui de chacun de l'au moins un nœud producteur sélectionné. Cette approche offre plusieurs avantages. En favorisant les nœuds producteurs les plus proches des nœuds consommateurs, elle réduit les pertes énergétiques dues au transport et optimise l'utilisation des ressources du réseau. Sur le plan économique, le coût de transfert d'énergie est maîtrisé grâce au seuil prédéfini, garantissant que seuls les transferts rentables et viables sont effectués. Cette méthode permet également une plus grande flexibilité, car le seuil peut être ajusté en fonction des conditions du réseau, comme une forte demande ou des limitations ponctuelles. De plus, elle contribue à une répartition intelligente et efficace des ressources énergétiques, minimisant les inefficacités liées aux longues distances.

Dans un mode de réalisation, l'étape b. est exécutée de sorte que l'emplacement géographique de chacun de l'au moins un nœud producteur sélectionné soit situé à l'intérieur d'un périmètre défini, autour de l'emplacement géographique du nœud consommateur. Ce périmètre, qui peut être représenté par un rayon ou une zone géographique spécifique, est déterminé en fonction des règles locales de partage. Lorsqu'une demande d'énergie est émise par un nœud consommateur, la méthode identifie les nœuds producteurs disponibles dont l'emplacement se trouve à l'intérieur de ce périmètre. Ces contraintes géographiques sont intégrées dans la méthode pour garantir que seuls les nœuds producteurs situés dans les zones autorisées ou à l'intérieur des périmètres définis sont sélectionnés. Cette adaptation aux règles locales permet de respecter les cadres réglementaires tout en optimisant les transferts d'énergie dans les limites imposées.

Dans un mode de réalisation, un nœud producteur et/ou consommateur peut être constitué d'une batterie mobile, par exemple une batterie d'un véhicule électrique, ou une borne de recharge associée ou un ensemble de véhicules électriques dont la capacité de stockage est mise à disposition du réseau virtuel. Un tel nœud peut fonctionner selon un mode de type véhicule-réseau, dans lequel l'énergie stockée dans la batterie du véhicule est susceptible d'être réinjectée virtuellement dans le réseau, ou selon un mode de recharge optimisée, dans lequel la demande de recharge est planifiée en fonction des disponibilités énergétiques locales, des contraintes de mobilité de l'utilisateur et des métadonnées associées.

Par exemple, lorsque les ratios de satisfaction des nœuds consommateurs satisfont un critère d'équilibre prédéfini, la méthode peut privilégier le stockage local de l'énergie excédentaire avant toute revente ou réallocation vers un réseau global. À cet effet, l'algorithme sélectionne prioritairement un ou plusieurs nœuds de stockage situés à proximité des nœuds producteurs, notamment des batteries stationnaires, des véhicules électriques ou des dispositifs de stockage distribués, afin de limiter les transferts énergétiques de longue distance.

L'invention concerne également un produit programme d'ordinateur comprenant des instructions logicielles qui, lorsqu'elles sont exécutées par un ordinateur, mettent en œuvre la méthode selon l'un quelconque des modes de réalisation susmentionnés.

### Brève description des figures

D'autres caractéristiques et avantages de la présente invention apparaîtront à la lecture de la description détaillée qui suit, pour la compréhension de laquelle on se reportera aux figures annexées, parmi lesquelles :
- La Figure 1 illustre un schéma bloc de la méthode selon un mode de réalisation l'invention,
- La Figure 2 illustre schématiquement un exemple d'un réseau dans lequel est géré le partage d'énergie à travers la méthode selon un mode de réalisation de l'invention,
- La Figure 3 illustre un exemple de résultats obtenus par la méthode selon un mode de réalisation de l'invention.

Les dessins des figures ne sont pas à l'échelle. Des éléments semblables sont en général dénotés par des références semblables dans les figures. Dans le cadre du présent document, les éléments identiques ou analogues peuvent porter les mêmes références. En outre, la présence de numéros ou lettres de référence aux dessins ne peut être considérée comme limitative, y compris lorsque ces numéros ou lettres sont indiqués dans les revendications.

### Description détaillée de certains modes de réalisation de l'invention

Cette partie présente une description détaillée de certains modes de réalisation de la présente invention. Cette dernière est décrite avec des réalisations particulières et des références à des figures mais l'invention n'est pas limitée par celles-ci. En particulier, les dessins et les figures décrits ci-dessous ne sont que schématiques et ne sont pas limitants.

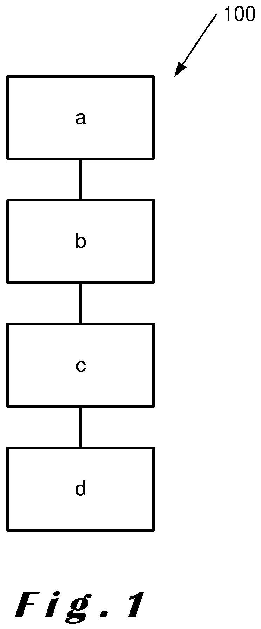

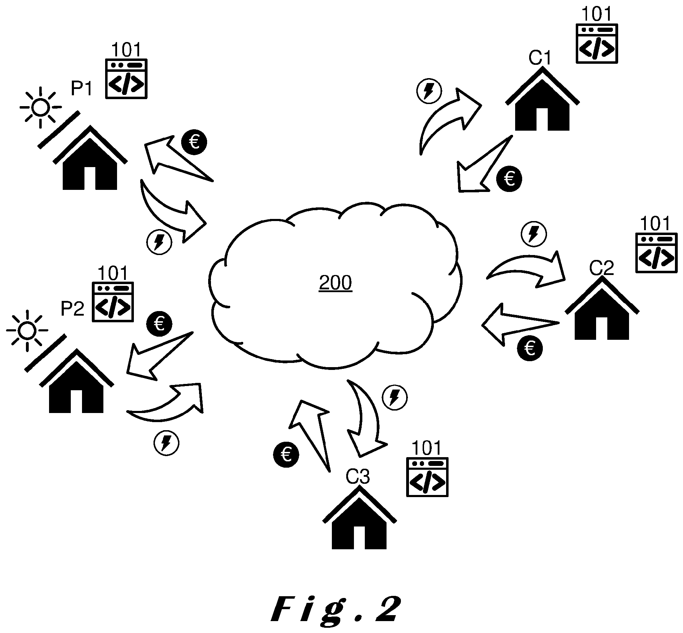

En référence aux figures 1 et 2, l'invention concerne une méthode 100 mise en œuvre par ordinateur pour gérer le partage d'énergie dans un réseau 200 comprenant une pluralité de nœuds producteurs P1 et P2 et de nœuds consommateurs C1, C2 et C3. De préférence, la méthode 100 repose sur une plateforme de « match-making » et de « sharing-making », dotée d'une interface graphique, regroupant les demandes et offres d'énergie, tout en offrant une expérience utilisateur transparente. Cette plateforme fonctionne comme un hub centralisé, permettant de collecter, analyser et redistribuer les informations énergétiques aussi bien en mode asynchrone qu'en temps réel, selon la disponibilité des données fournies par les distributeurs d'énergie. Elle peut fournir aux utilisateurs des décomptes mensuels, trimestriels ou annuels, leur permettant d'évaluer leur consommation, leur efficacité énergétique et de mieux planifier leurs besoins futurs. Par exemple, une maison peut recevoir chaque mois un rapport détaillant son pourcentage d'utilisation d'énergie renouvelable et les économies réalisées, tandis qu'une entreprise peut bénéficier de rapports trimestriels plus complexes, incluant des analyses spécifiques à ses activités. Cette plateforme offre une flexibilité supplémentaire grâce à son algorithme adaptatif qui ajuste dynamiquement les ressources en fonction des fluctuations de la demande et de l'offre, garantissant ainsi une répartition équitable et efficace des ressources énergétiques. De plus, cette plateforme peut permettre l'intégration d'une gestion fine basée sur des périodes de 15 minutes, apportant une précision significative aux échanges énergétiques. Cette approche par quart d'heure, standard dans le secteur de l'énergie, permet de capter et d'analyser les fluctuations dynamiques de la production et de la consommation avec une granularité plus fine. Contrairement à des analyses uniquement agrégées sur des périodes mensuelles ou trimestrielles, cette approche assure une optimisation des ressources disponibles et une adaptation rapide aux variations imprévues. Les échanges sont alors simulés et réalisés au niveau du quart d'heure, ce qui permet une meilleure traçabilité des données. Cette granularité garantit également que les rapports détaillés, qu'ils soient par exemple, mensuels pour une maison ou trimestriels pour une entreprise, soient enrichis par des données précises, reflétant fidèlement l'impact de chaque période de consommation ou de production. Cela offre une flexibilité renforcée, maximisant ainsi les économies pour les utilisateurs tout en soutenant une gestion durable et transparente de l'énergie.

Prenons l'exemple d'une maison individuelle (C1) qui consomme de l'énergie entre 18h00 et 19h00, avec une demande totale de 4 kWh, répartie uniformément sur les quatre quarts d'heure. Au moment de la consommation, la plateforme exécute les transferts énergétiques en temps réel, enregistrant les données pour chaque quart d'heure. Par exemple :
- 18h00-18h15 : P1 fournit 1 kWh à C1.
- 18h15-18h30 : P1 continue à fournir 1 kWh.
- 18h30-18h45 : P2 prend le relais et fournit 1 kWh.
- 18h45-19h00 : P2 fournit 1 kWh supplémentaire
Les fluctuations rapides de la demande et de la production sont alors, suivies de près, permettant une réponse adaptée à chaque tranche de 15 minutes. À la fin de du mois, la plateforme peut compiler ces données granulaires pour générer un rapport global. Par exemple, le rapport pour C1 indiquerait :
- Total consommé : 4 kWh.
- Fournisseurs : P1 (2 kWh), P2 (2 kWh).
- Distribution horaire : détaillée par tranche de 15 minutes.

Par ailleurs, la plateforme intègre une dimension solidaire et inclusive, où aucun critère discriminatoire n'est utilisé pour déterminer l'accès aux ressources énergétiques. Cela signifie que, quels que soient le statut économique des noeuds participants (résidentiels, commerciaux, industriels) ou leur localisation géographique (zones urbaines ou rurales), tous bénéficient d'un traitement équitable. Par ailleurs, la plateforme considère qu'un nœud consommateur ou producteur peut participer au réseau, peu importe son statut juridique ou civil. Cela signifie que les ménages, les entreprises privées, et les institutions publiques peuvent tous jouer un rôle actif dans le réseau, pourvu qu'un code EAN (European Article Number) soit identifié.
Cette exclusion de paramètres discriminatoires vise à garantir que le système reste accessible et juste pour l'ensemble des nœuds participants.

La méthode 100 selon l'invention, comprend une étape a. consistant à recevoir d'un nœud consommateur C1, C2, ou C3, une demande de quantité d'énergie. Cette étape est, de préférence, exécutée de façon automatique. Un nœud consommateur C1, C2, ou C3 peut être, par exemple, une maison individuelle, ou un bâtiment commercial. Ces nœuds consommateurs C1, C2, et C3 peuvent demander de l'énergie pour alimenter divers équipements tels que des appareils ménagers, des machines ou des systèmes d'éclairage.

La méthode 100 comprend ensuite une étape b. consistant à sélectionner au moins un nœud producteur P1, P2 sur la base de la quantité d'énergie demandée, d'une quantité d'énergie produite par chacun de l'au moins un nœud producteur P1, P2 et de métadonnées 101 caractéristiques de chacun des nœuds consommateur C1, C2, C3 et producteur P1, P2. Un nœud producteur P1, P2 peut être, par exemple, une maison individuelle équipée de sa propre installation solaire, capable de générer et de partager jusqu'à 10 kWh d'énergie excédentaire sur une journée ensoleillée. La méthode 100 permet de sélectionner un ou plusieurs nœuds producteurs P1, P2, chacun contribuant une quantité spécifique d'énergie. La sélection est réalisée en fonction de la quantité d'énergie demandée par le nœud consommateur C1, C2, C3, d'une quantité d'énergie produite par chacun des nœud producteurs P1, P2 et de métadonnées caractéristiques des nœuds consommateur C1, C2, C3 et producteur P1, P2. Les métadonnées 101 regroupent des informations essentielles sur les nœuds producteurs P1, P2 et consommateurs C1, C2, C3, telles que, leur localisation géographique, leur impact environnemental ou leur priorité énergétique. De préférence, elles incluent des données relatives à l'historique de consommation et de production d'énergie. De préférence, l'historique est fournie suivant une période de 3 ans. Cet historique permet d'identifier des tendances saisonnières, des fluctuations journalières ou hebdomadaires, et des comportements spécifiques des nœuds producteurs P1, P2 et consommateurs C1, C2, C3.

En utilisant ces informations, la méthode 101 peut exécuter une étape e. consistant à estimer la quantité d'énergie demandée par le nœud consommateur C1, C2, C3 et celle produite par chacun des nœuds producteurs P1, P2. Cela peut être réalisé, grâce à des algorithmes de prédiction et d'apprentissage automatique. Dans cette configuration, l'au moins un nœud producteur P1, P2 est sélectionné à l'étape b. sur la base des quantités d'énergie demandée et produite estimées. Avantageusement, cela permet d'améliorer la planification des transferts et l'optimisation des ressources, en anticipant par exemple une hausse de la demande résidentielle en hiver ou une baisse de production solaire en période nuageuse. La méthode 100 garantit ainsi, une allocation dynamique et proactive de l'énergie, réduisant les pertes et les déséquilibres. Avantageusement, la méthode 100 permet de s'adapter aux formats de données fournies par les distributeurs d'énergie, ce qui lui permet de fonctionner de manière fluide avec des systèmes variés. Cette flexibilité garantit une intégration avec les infrastructures existantes et facilite l'échange de données.

De préférence, les métadonnées 101 comprennent une information sur l'emplacement géographique de chacun des nœuds consommateurs C1, C2, C3 et producteurs P1, P2. Ces informations géographiques jouent un rôle clé dans la sélection des nœuds producteurs à l'étape b. Cette étape est exécutée de manière à ce que le coût de transfert d'énergie entre le nœud consommateur C1, C2, C3 et les nœuds producteurs P1, P2 sélectionnés soit inférieur à un seuil prédéfini, De préférence, cette étape est exécutée de manière à ce que le coût de transfert d'énergie soit optimisé pour être réduit au minimum. Le coût de transfert est défini comme une fonction croissante de la distance entre l'emplacement géographique du nœud consommateur C1, C2, C3 et celui de chaque nœud producteur P1, P2 sélectionné. Un nœud producteur P1, P2 éloigné entraîne généralement un coût de transfert plus important en raison des pertes énergétiques dans les lignes de transmission sur de longues distances, de l'infrastructure complexe nécessaire pour transporter cette énergie et des frais de maintenance plus élevés associés à ces distances. Par exemple, si un nœud consommateur C1, C2, C3 résidentiel est situé à proximité d'une maison individuelle équipée de panneaux solaires, la méthode privilégiera ce nœud producteur par rapport à d'autres, afin de minimiser le coût de transfert. Cela permet ainsi de maximiser l'utilisation des ressources disponibles, en tenant compte des données géographiques et des besoins spécifiques des différents participants du réseau 200. Bien que cette approche privilégie les circuits courts pour l'allocation virtuelle de l'énergie, elle n'intervient pas directement sur les pertes physiques liées au transport d'énergie, qui restent dépendantes des infrastructures existantes (câbles, transformateurs, etc.).

Par ailleurs, l'information sur l'emplacement géographique de chacun des nœuds consommateurs C1, C2, C3 et producteurs P1, P2, peut être également utilisée pour sélectionner à l'étape b. les nœuds producteurs P1, P2, situés à l'intérieur d'un périmètre défini, autour de l'emplacement géographique du nœud consommateur C1, C2, C3. Par exemple, en Espagne, un périmètre de X kilomètres autour de la résidence du nœud producteur P1, P2, doit être respecté, limitant ainsi les transferts d'énergie à une zone géographique restreinte. En Belgique, les règles interdisent le partage d'énergie entre régions, ce qui implique que chaque région doit être considérée comme une entité distincte par la méthode 100.

Dans un mode de réalisation, le registre distribué de chaînes de blocs est interopérable avec au moins un registre externe, notamment un registre officiel de garanties d'origine, un registre d'un gestionnaire de réseau de transport, un registre d'un gestionnaire de réseau de distribution ou une autre chaîne de blocs dédiée à la traçabilité énergétique. Cette interopérabilité peut être assurée par une interface de programmation, ou un protocole d'échange permettant d'associer à chaque transfert d'énergie une information de provenance, de certification ou de conformité réglementaire. Lorsque le partage d'énergie implique plusieurs zones géographiques, régions administratives, zones de réglage ou États, la méthode peut prendre en compte des règles tarifaires et réglementaires propres à chacune des zones traversées. La méthode peut notamment définir au moins un nœud de transit virtuel associé à une frontière administrative ou technique, ledit nœud de transit étant utilisé pour calculer un frais de passage, une taxe, une contrainte de capacité ou un coût d'utilisation du réseau applicable au transfert d'énergie concerné.

En outre, la méthode 100 selon l'invention, comprend une étape c. consistant à réaliser un transfert d'énergie entre l'au moins un nœud producteur P1, P2 sélectionné à l'étape précédente et le nœud consommateur C1, C2, C3 de l'étape a. La réalisation des transferts d'énergie se fait de manière virtuelle, où chaque nœud producteur P1, P2 sélectionné envoie une quantité d'énergie spécifiée au nœud consommateur C1, C2, C3 par le biais de l'infrastructure logicielle du réseau 200. En contrepartie, chaque nœud producteur P1, P2 peut recevoir une compensation financière proportionnelle à la quantité d'énergie transférée, selon les termes préalablement établis par le système. Par exemple, si un nœud consommateur C1, C2, C3 demande 10 kWh, cette demande peut être satisfaite par plusieurs nœuds producteurs P1, P2 : une première maison individuelle fournissant 6 kWh et une deuxième maison individuelle offrant les 4 kWh restants. Chaque nœud producteur P1, P2 reçoit une rémunération calculée sur la base du tarif convenu. Ce mécanisme garantit une répartition équitable des ressources, et une flexibilité dans l'attribution des ressources énergétiques.

À la suite du transfert d'énergie de l'étape c., la méthode 100 comprend une étape d. consistant à enregistrer dans un registre distribué de chaînes de blocs, une information représentative du transfert d'énergie réalisé à l'étape précédente. En effet, Chaque transaction est enregistrée de façon transparente et immuable dans un registre distribué basé sur la technologie des chaînes de blocs. Ce registre consigne des informations essentielles, telles que les quantités transférées, les identifiants des nœuds impliqués, les dates et heures précises, ainsi que les coûts associés. La méthode 100 assure ainsi une traçabilité complète et renforce la confiance des nœuds participants.

### Exemple : Gestion du partage d'énergie dans un réseau énergétique domestique.

Dans ce scénario, le réseau énergétique est composé d'un nœud consommateur C1 et de trois nœuds producteurs P1, P2, P3 localisés à différentes distances et utilisant des technologies renouvelables :

### Nœud consommateur :

- **C1 :** Une maison individuelle située en zone urbaine, avec une demande spécifique de 12 kWh pour la période de 18h à 22h.

### Nœuds producteurs :

- **P1 :** Maison équipée de panneaux solaires, elle produit en moyenne 8 kWh par jour et est située à 2 km du consommateur.
- **P2 :** Une éolienne domestique à production variable, avec une disponibilité actuelle de 2 kWh, localisée à 5 km.
- **P3 :** Une batterie alimentée par un mix solaire et éolien, capable de fournir jusqu'à 10 kWh, localisée à 3 km.

### Étape a : Réception de la demande d'énergie

La maison C1 consommatrice, équipée d'un compteur intelligent, envoie automatiquement une demande au système. Les informations transmises incluent au système :
**Quantité demandée** : 12 kWh pour la période de 18h à 22h.
**Métadonnées :**
   - **Historique de consommation** : Une analyse sur les trois dernières années montre un pic régulier entre 18h et 22h, avec une consommation moyenne de 12 à 14 kWh en soirée.
   - **Préférences** : Le consommateur priorise une énergie composée d'au moins 80 % de sources renouvelables et impose un coût moyen de transfert maximal de 0,20 €/kWh.
   - **Emplacement géographique** : Les coordonnées exactes de la maison permettent d'optimiser la sélection des producteurs en fonction de leur distance.
Ces informations détaillées permettent à la méthode de passer à l'étape suivante, où elle analyse l'énergie produite des nœuds producteurs.

### Étape b : Sélection des nœuds producteurs

La méthode utilise les métadonnées des producteurs pour évaluer leurs capacités et sélectionner les meilleurs candidats en fonction de plusieurs critères :
P1 (Solaire) :
   - Production actuelle estimée à 6 kWh en raison d'une journée ensoleillée.
   - Localisation proche (2 km) et coût de transfert bas (0,05 €/kWh).
   - Historique stable, avec une production régulière sur trois ans.
P2 (Éolienne) :
   - Production variable, mais disponibilité confirmée de 2 kWh pour ce jour.
   - Localisation éloignée (5 km) avec un coût de transfert modéré (0,10 €/kWh).
      - Historique variable, mais prévisions positives.
P3 (Batterie) :
   - Capacité actuelle disponible de 10 kWh, pouvant sécuriser la demande restante.
   - Localisation intermédiaire (3 km) et coût de transfert bas (0,07 €/kWh).
   - Historique montrant une fiabilité élevée pour combler les pics de demande.

### Décision du système :

À la suite d'une analyse multicritères basée sur les métadonnées disponibles, à savoir la proximité géographique, la nature de production, disponibilité des nœuds producteurs, l'historique de production/consommation, la méthode attribue les contributions suivantes pour satisfaire la demande de 12 kWh :
- 6 kWh de P1 pour son énergie solaire immédiate.
- 2 kWh de P2 en complément grâce à sa production éolienne.
- 4 kWh de P3 pour sécuriser le reste via sa batterie.

### Étape c : Réalisation du transfert d'énergie

Une fois les nœuds producteurs sélectionnés, le transfert virtuel est initié. Chaque producteur envoie la quantité spécifiée d'énergie via le réseau :
- P1 transfère 6 kWh.
- P2 transfère 2 kWh.
- P3 transfère 4 kWh.

Pour déterminer combien C1 doit payer en contrepartie de l'énergie reçue, les calculs sont détaillés dans le tableau ci-dessous, en fonction de l'exemple donné.

| **Nœud** | **Énergie fournie (kWh)** | **Distance (km)** | **Prix de l'énergie (€/kWh)** | **Coût énergie (€)** | **Coût transfert (€/kWh)** | **Coût transfert (€)** | **Total (€)** |
|---|---|---|---|---|---|---|---|
| P1 | 6 | 2 | 0.12 | 0.72 | 0.05 | 0.30 | 1.02 |
| P2 | 2 | 5 | 0.15 | 0.30 | 0.10 | 0.20 | 0.50 |
| P3 | 4 | 3 | 0.18 | 0.72 | 0.07 | 0.28 | 1.00 |

Cette allocation énergétique répartit les besoins du consommateur C1 entre trois producteurs P1, P2 et P3 en fonction de leurs capacités, de leur proximité, et des coûts de l'énergie et du transfert. Le nœud P1, étant le plus proche (2 km), fournit 6 kWh à un coût compétitif de 0,12 €/kWh, ce qui le rend économiquement favorable malgré un coût de transfert modéré de 0,05 €/kWh. Le nœud P2, bien que plus éloigné (5 km), contribue 2 kWh à un prix de 0,15 €/kWh, avec un coût de transfert plus élevé à 0,10 €/kWh. Enfin, P3, situé à 3 km, apporte 4 kWh à un tarif énergétique de 0,18 €/kWh et un coût de transfert intermédiaire de 0,07 €/kWh, utilisant sa capacité à combler les pics de demande. Cette allocation optimise le coût global pour le consommateur, qui paie un total de 2,52 €, répartis entre 1,74 € pour l'énergie transférée et 0,78 € pour les frais de transfert.

### Étape d : Enregistrement des transactions

Chaque transfert est enregistré dans un registre distribué pour garantir transparence et traçabilité. Les enregistrements incluent :
- Quantité d'énergie transférée.
- Identifiants des nœuds (consommateur et producteurs).
- Horodatage exact.
- Coûts associés.

Exemple d'enregistrement :
- Transfert 1: 6 kWh de P1 → C1.
- Transfert 2: 2 kWh de P2 → C1.
- Transfert 3: 4 kWh de P3 → C1.

Ces enregistrements garantissent une traçabilité complète et permettent au nœud consommateur d'accéder à un rapport détaillé de ses échanges énergétiques.

Ce scénario démontre comment la méthode 100 optimise le partage d'énergie dans un réseau 200 virtuel en tenant compte des capacités des producteurs P1, P2, P3, des préférences du consommateur C1, et des contraintes géographiques et économiques.

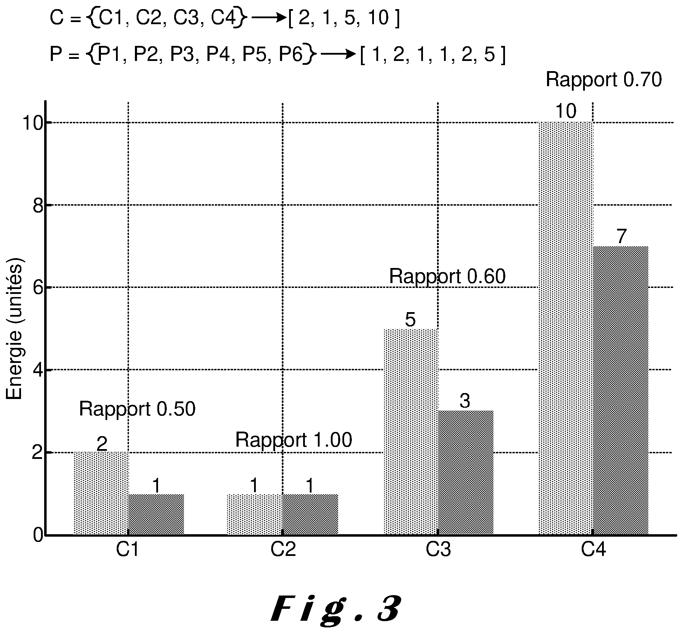

La Figure 3 illustre un exemple de mise en œuvre de la méthode, pour gérer le partage d'énergie dans un réseau comprenant plusieurs nœuds producteurs P1 à P6 et consommateurs C1 à C4. Dans ce scénario, le réseau présente quatre nœuds consommateurs C1, C2, C3 et C4 ayant des demandes respectives de 2, 1, 5 et 10 unités d'énergie, et six nœuds producteurs P1 à P6, disposant de capacités respectives de 1, 2, 1, 1, 2 et 5 unités, soit un total de 12 unités disponibles pour une demande totale de 18 unités.

La méthode commence par une étape où chaque nœud consommateur C1 à C4 du réseau envoie automatiquement sa demande d'énergie, et le système sélectionne les nœuds producteurs P1 à P6 appropriés en se basant sur les quantités d'énergie disponibles et sur, par exemple, l'objectif de couvrir au moins 50% de l'énergie demandée, tout en minimisant l'écart-type des ratios entre l'énergie reçue et l'énergie demandée par les nœuds consommateurs C1 à C4. Dans cet exemple, il est spécifié que la méthode ne prend pas en compte les métadonnées associées aux nœuds consommateurs et producteurs.

Les allocations calculées donnent les résultats suivants : C1 reçoit 1 unité sur 2 demandées (50 % de satisfaction), C2 reçoit 1 unité sur 1 demandée (100 % de satisfaction), C3 reçoit 3 unités sur 5 demandées (60 % de satisfaction) et C4 reçoit 7 unités sur 10 demandées (70 % de satisfaction).

L'écart-type des ratios de satisfaction est de 0,187, montrant une répartition équilibrée des ressources avec une faible dispersion.

La méthode attribue les nœuds producteurs P1 à P6 aux consommateurs C1 à C4 comme suit.

| **Nœud producteur** | **Quantité produite (unités)** | **Nœud consommateur** |
|---|---|---|
| P1 | 1 | C1 |
| P2 | 2 | C3 |
| P3 | 1 | C2 |
| P4 | 1 | C3 |
| P5 | 2 | C4 |
| P6 | 5 | C4 |

Une fois ces allocations effectuées, le transfert virtuel est initié, et chaque nœud consommateur C1 à C4 reçoit l'énergie allouée. Les transferts sont ensuite enregistrés dans un registre distribué basé sur la chaine de blocs, incluant des détails tels que les quantités transférées, les identifiants des nœuds producteurs et consommateurs, les horodatages précis et les statuts des transferts.

Dans cet exemple, la méthode permet d'atteindre une couverture énergétique globale de 66,67 % de la demande totale tout en minimisant les déséquilibres grâce à une répartition équitable des ressources, validée par un écart-type faible.

En résumé, la présente invention concerne une méthode informatique pour gérer de manière optimisée le partage d'énergie dans un réseau 200 comprenant des nœuds producteurs P1, P2, P3, P4, P5, P6 et des nœuds consommateurs C1, C2, C3, C4. La méthode repose sur une approche décentralisée assurant une répartition proactive et équilibrée des ressources tout en minimisant les pertes et les coûts. Les transferts d'énergie sont réalisés de manière sécurisée et transparente grâce à un registre distribué basé sur la technologie de chaine de blocs. Cette méthode 100 garantit une gestion efficace de l'énergie dans un réseau virtuel, favorisant l'intégration des énergies renouvelables et la conformité avec les exigences réglementaires.

## Revendications

1. Méthode (100) mise en œuvre par ordinateur pour gérer le partage d'énergie dans un réseau (200) comprenant une pluralité de nœuds producteurs (P1, P2, P3, P4, P5, P6) et de nœuds consommateurs (C1, C2, C3, C4), la méthode (100) comprenant les étapes suivantes :
a. recevoir d'un nœud consommateur (C1, C2, C3, C4), une demande de quantité d'énergie,
b. sélectionner au moins un nœud producteur (P1, P2, P3, P4, P5, P6) sur la base de la quantité d'énergie demandée, d'une quantité d'énergie produite par chacun de l'au moins un nœud producteur (P1, P2, P3, P4, P5, P6) et de métadonnées (101) caractéristiques de chacun des nœuds consommateur (C1, C2, C3, C4) et producteur (P1, P2, P3, P4, P5, P6),
c. réaliser un transfert d'énergie entre l'au moins un nœud producteur (P1, P2, P3, P4, P5, P6) sélectionné à l'étape précédente et le nœud consommateur (C1, C2, C3, C4) de l'étape a.,
d. enregistrer dans un registre distribué de chaines de blocs, une information représentative du transfert d'énergie réalisé à l'étape précédente.

2. Méthode (100) selon la revendication précédente, **caractérisée en ce que** les étapes a., b., c. et d. sont exécutées de manière itérative de sorte à couvrir au moins 50% du total des quantités d'énergie demandées par les nœuds consommateurs (C1, C2, C3, C4).

3. Méthode (100) selon la revendication précédente, **caractérisée en ce que** les itérations visent à minimiser un écart-type de ratios de satisfaction, chaque ratio étant calculé pour un nœud consommateur (C1, C2, C3, C4) comme un rapport entre une quantité d'énergie reçue et la quantité d'énergie demandée par ce même nœud.

4. Méthode (100) selon l'une quelconque des revendications précédentes, **caractérisée en ce que** les étapes a., b., c. et d. sont exécutées de manière itérative de sorte à transférer entre 90% à 100% des quantités d'énergie produites par les nœuds producteurs (P1, P2, P3, P4, P5, P6).

5. Méthode (100) selon l'une quelconque des revendications précédentes, **caractérisée en ce que** les métadonnées (101) comprennent une information sur un historique de consommation et/ou de production d'énergie.

6. Méthode (100) selon la revendication précédente, comprenant en outre l'étape suivante :
e. estimer ladite quantité d'énergie demandée et respectivement produite sur la base de l'information sur l'historique de consommation et respectivement de production d'énergie,
**caractérisée en ce que** l'au moins un nœud producteur (P1, P2, P3, P4, P5, P6) est sélectionné à l'étape b. sur la base des quantités d'énergie demandée et produite estimées.

7. Méthode (100) selon l'une quelconque des revendications précédentes, **caractérisée en ce que** les métadonnées (101) comprennent une information sur un emplacement géographique de chacun des nœuds consommateurs (C1, C2, C3, C4) et producteurs (P1, P2, P3, P4, P5, P6).

8. Méthode (100) selon la revendication précédente, **caractérisée en ce que** l'étape b. est exécutée de sorte qu'un coût de transfert d'énergie entre le nœud consommateur (C1, C2, C3, C4) et l'au moins un nœud producteur (P1, P2, P3, P4, P5, P6) sélectionné soit inférieur à un seuil prédéfini, ledit coût de transfert d'énergie étant une fonction croissante d'une distance entre l'emplacement géographique du nœud consommateur (C1, C2, C3, C4) et celui de chacun de l'au moins un nœud producteur (P1, P2, P3, P4, P5, P6) sélectionné.

9. Méthode (100) selon l'une des revendications 7 ou 8, **caractérisée en ce que** l'étape b. est exécutée de sorte que l'emplacement géographique de chacun de l'au moins un nœud producteur (P1, P2, P3, P4, P5, P6) sélectionné soit situé à l'intérieur d'un périmètre défini, autour de l'emplacement géographique du nœud consommateur (C1, C2, C3, C4).

10. Produit programme d'ordinateur comprenant des instructions logicielles qui, lorsqu'elles sont exécutées par un ordinateur, mettent en œuvre une méthode (100) selon l'une quelconque des revendications 1 à 9.
